# EUROPÄISCHE PATENTANMELDUNG

(11) **EP 3 021 439 A2**
(43) Veröffentlichungstag der Anmeldung: **18.05.2016**
(21) Anmeldenummer: 15187834.5
(22) Anmeldetag: 01.10.2015
(51) Int. Cl.: H02G 3/14, H02G 3/18

(54) **ELEKTRONISCHES INSTALLATIONSGERÄT**

(30) Priorität: 12.11.2014 DE 102014016682
(71) Anmelder: ABB AG, 68309 Mannheim (DE)
(72) Erfinder: Mrkajic, Oliver, 58511 Lüdenscheid (DE); Lisson, Werner, 58093 Hagen (DE); Schrage, Ortwin, 47906 Kempen (DE)

(57) **Zusammenfassung**

Es wird ein elektronisches Installationsgerät für die Gebäudeinstallationstechnik oder Hauskommunikationstechnik vorgeschlagen, mit einem in einer Installationsdose unterzubringenden Funktionseinsatz (20), welcher mit einem Tragrahmen (21) ausgestattet ist, und mit einem auf dem Tragrahmen (21) anzuordnenden aufsteckbarem Bedien- oder Funktionsteil (30), welches mittels zumindest einer am Bedien- oder Funktionsteil (30) angebrachten Federanordnung (40) lösbar am Tragrahmen (21) des Funktionseinsatzes (20) befestigbar ist. Die zumindest eine Federanordnung (40) weist einen Steg (42) auf, an dessen Enden jeweils ein Federteil (41) angeordnet ist, wobei die Federteile (41) symmetrisch zueinander ausgeführt sind und jedes Federteil (41) der zumindest einen Federanordnung (40) mit einem entsprechend ausgeführtem Haltebereich (32) des Tragrahmens (21) zusammenwirkt. Das jeweilige Federteil (41) ist aus zwei einstückig miteinander verbundenen Federschenkeln (43, 44) gebildet, wobei beide Federschenkel des jeweiligen Federteiles an je einem Haltebereich (32) des an der Installationsdose festgelegten Tragrahmens (21) so zur Anlage kommen, dass die Federteile (41) in ihrer Endposition jeweils zweiseitig an der Innenseite der Haltebereiche (32) festgeklemmt sind.

## Beschreibung

Die Erfindung betrifft ein elektronisches Installationsgerät der Gebäudeinstallationstechnik oder Hauskommunikationstechnik gemäß den Merkmalen des Oberbegriffs des Anspruchs 1. Das erfindungsgemäße Installationsgerät kann als Unterputz- oder Aufputz- Gerät ausgeführt sein.

Die bekannten Installationsgeräte sind dafür vorgesehen, eine Vielzahl von in Gebäuden installierten Aktoren, wie Jalousieantriebe, Beleuchtungseinrichtungen, Fühler, Bewegungsmelder und Wächter mittels Schaltern, Tastern, Dimmern usw. zu bedienen.

Für eine Unterputzmontage sind die Installationsgeräte aus einem von einer Unterputzdose aufnehmbaren Unterputz- oder Funktionseinsatz, welcher mit einem Tragrahmen bzw. Tragring ausgestattet ist, und einem auf den Unterputzeinsatz aufsteckbarem Bedienteil oder Funktionsteil aufgebaut. Das elektronische Unterputz-Installationsgerät wird komplettiert durch einen Abdeckrahmen. Auch werden Sensor- Bedienteile auf den Tragring aufgesetzt, welche keinem Unterputz- oder Funktionseinsatz haben.

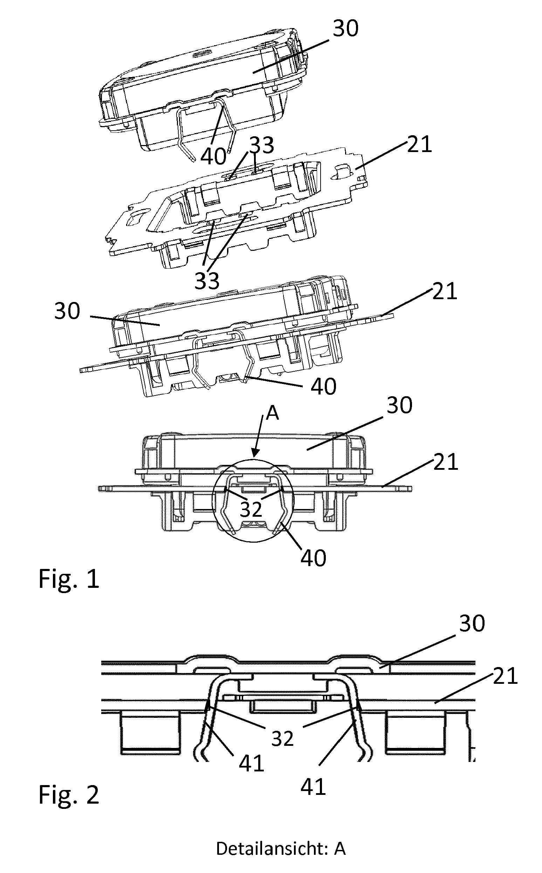

In der Figur 1 ist eine beispielhafte Anordnung eines Bedien- oder Funktionsteil gezeigt, welches in den Tragrahmen montiert wird. Dazu ist am Bedien- oder Funktionsteil zumindest eine Halte- oder Klemmfeder angebracht, die mit einem entsprechend ausgeführten Haltebereich des an der Installationsdose festgelegten Tragrahmens so zusammenwirkt, dass die Haltefeder durch im Haltebereich des Tragrahmens befindliche abgewinkelte Bereiche geführt wird und somit in ihrer Endposition einseitig an der Innenseite der Haltebereiche festklemmt.

Die bei dieser einseitigen Klemmung wirkenden Federkräfte sind jedoch für viele Anwendungen nicht akzeptabel, da die wirkende Initialkraft so gering ist, dass das Bedienteil leicht aus seiner Endposition bewegt werden kann, das Bedienteil sowie der Abdeckrahmen dabei gelockert werden und Funktionsstörungen am Installationsgerät auftreten.

Der Erfindung liegt somit die Aufgabe zugrunde, ein elektronisches Installationsgerät der Gebäudeinstallationstechnik oder Hauskommunikationstechnik zu schaffen, bei welchem eine einfache und verbesserte Befestigung des Bedien- oder Funktionsteil am Tragrahmen des Funktionsteiles realisiert ist.

Erfindungsgemäß wird diese Aufgabe durch die im Anspruch 1 angegebenen Merkmale gelöst. Vorteilhafte Ausgestaltungen der Erfindung ergeben sich aus der Beschreibung, den Figuren und den weiteren Ansprüchen.

Das erfindungsgemäße elektronische Installationsgerät besteht aus einem in einer Installationsdose unterzubringenden Funktionseinsatz, welcher mit einem Tragrahmen bzw. Tragring ausgestattet ist, und einem auf den Funktionseinsatz, vorzugsweise unter Zwischenschaltung eines Abdeckrahmens, an einer Wand anzuordnenden aufsteckbarem Bedienteil oder Funktionsteil. Das Bedienteil oder Funktionsteil ist mittels zumindest einer am Bedienteil oder Funktionsteil angebrachten Federanordnung lösbar am Tragrahmen des Funktionseinsatzes befestigbar.

Optional kann das Installationsgerät gemäß Anspruch 8 auch nur aus einem Tragrahmen ohne Funktionseinsatz aufgebaut sein.

Bevorzugt ist der Funktionseinsatz als Unterputzeinsatz mit darauf befindlichem Tragring und/oder das Bedien- oder Funktionsteil als Schaltgerät, Anzeigegerät oder Abdeckplatte ausgeführt.

Die zumindest eine Federanordnung ist aus einem einen Steg aufgebaut, an dessen Enden jeweils ein Federteil angeordnet ist. Die Federteile sind symmetrisch zueinander ausgeführt. Jedes Federteil der zumindest einen Federanordnung wirkt mit einem entsprechend ausgeführtem Haltebereich des Tragrahmens zusammen, der als abgewinkelter Bereich ausgeführt ist.

Erfindungsgemäß ist jedes Federteil jeweils einstückig aus einem äußeren Federschenkel und einem innenliegenden ein freies Ende aufweisenden Federschenkel gebildet. Beide Federschenkel des jeweiligen Federteiles liegen nach dem Zusammenbau des Installationsgerätes an je einem Haltebereich des an der Installationsdose festgelegten Tragrahmens an, so dass die Federteile in ihrer Endposition jeweils zweiseitig an der Innenseite der Haltebereiche festgeklemmt sind.

Bevorzugt sind am Bedien- oder Funktionsteil zwei Federanordnungen angebracht, die durch entsprechend ausgeführten Öffnungen des am Funktionseinsatz festgelegten Tragrahmens geführt werden und dabei mit den Haltebereichen am Tragrahmen zusammenwirken. Die Klemmkraft der Federanordnung erhöht sich damit und wirkt nunmehr durch die jeweils zwei Federschenkel jedes Federteiles. Hierdurch wird die Initialkraft erhöht, wodurch vermieden wird, dass durch einen leichten Stoß sich das Bedienteil und der Abdeckrahmen lockern können und Funktionsstörungen am Installationsgerät auftreten.

Auch wird durch die erfindungsgemäßen Federanordnungen im Zusammenspiel der jeweils zwei Federschenkel eines Federteiles in vorteilhafter Weise ein Rückziehen des Installationsgerätes ermöglicht und eine konstantere Federcharakteristik erreicht, so dass beim "Tapeten- oder Putzausgleich" weiterhin eine ausreichende Initialkraft wirkt.

Die vorgesehenen vier Federschenkel der Federanordnung, von denen jeweils zwei einstückig miteinander verbunden sind und das Federteil bilden, stützen sich in vorteilhafter Weise mit ihren Hauptflächen an vier Haltebereichen des Tragrahmens großflächig ab.

In einer bevorzugten Ausführungsform der Erfindung ist an den direkt am Steg angeordneten äußeren Federschenkeln an seinem mit dem innenliegenden Federschenkel verbundenen Enden jeweils ein Teilbereich abgewinkelt und bildet entsprechend eine Einführschräge. Bei einer solchen Ausbildung ist besonders vorteilhaft, dass die Montage beim Aufstecken des Bedien- oder Funktionsteils auf den Funktionseinsatz erleichtert wird.

In einer Ausgestaltung des erfindungsgemäßen Installationsgerätes bildet der zwischen den beiden Federteilen angeordnete Steg der Federanordnung mit seiner auf dem Bedienteil oder Funktionsteil aufliegenden Fläche, also im eingebauten Zustand mit dem zur Wand weisenden Sockel eine nicht lösbare Verbindung mit diesem. Dazu wird wenigstens ein Bereich des Steges während der Herstellung des Bedienteil oder Funktionsteiles umspritzt. Die nicht lösbare Verbindung kann aber auch auf andere Weise erfolgen und beispielsweise kann der Steg an der Unterseite des Bedien- oder Funktionsteiles eingepresst, warmverstemmt oder verschraubt sein.

Die Erfindung wird nachstehend anhand der in den Zeichnungen dargestellten Ausführungsbeispiele näher erläutert. Es zeigen:
- **Fig. 1**: eine Explosionsansicht eines aus dem Stand der Technik bekannten Installationsgerätes,
- **Fig. 2**: eine vergrößerte Detailansicht des aus dem Stand der Technik bekannten Installationsgerätes mit den Haltebereiche, an denen die Federanordnung am Tragring anliegt,
- **Fig. 3**: eine räumliche Explosionsdarstellung eines beispielhaften erfindungsgemäßen Installationsgerätes mit Unterputzeinsatz, Abdeckrahmen und Funktions- oder Bedienelement,
- **Fig. 4**: eine Schnittdarstellung des erfindungsgemäßen Installationsgerätes im Zusammenbau,
- **Fig. 5**: eine schematische vergrößerte Schnittdarstellung einer beispielhaften Federanordnung, und
- **Fig. 6**: eine beispielhafte Explosionsansicht als Schnittdarstellung durch das erfindungsgemäße Installationsgerät.

**Figur** 1 zeigt eine Explosionsansicht eines aus dem Stand der Technik bekannten Installationsgerätes, welches im Wesentlichen aus einem Funktions- oder Bedienteil 30 und einem dazugehörigen Tragring 21 aufgebaut ist. Der Tragring 21 ist an einer Unterputzdose befestigt. Das Funktions- oder Bedienteil 30 ist mittels zwei Federanordnungen 40 lösbar über am Tragring 21 vorgesehene Öffnungen 33 und Haltebereiche 32 zusammengefügt. Die zweite Federanordnung 40 ist parallel zur ersten Federanordnung 40 am Bedien- oder Funktionsteil 30 angeordnet und somit in der gezeigten Darstellung nicht sichtbar.

In der **Figur** 2 ist eine vergrößerte Detailansicht des aus dem Stand der Technik bekannten Installationsgerätes dargestellt, welches beispielhaft die Haltebereiche 32 einer der beiden Federanordnungen 40 am Tragring 21 in ihrer Endposition zeigt.

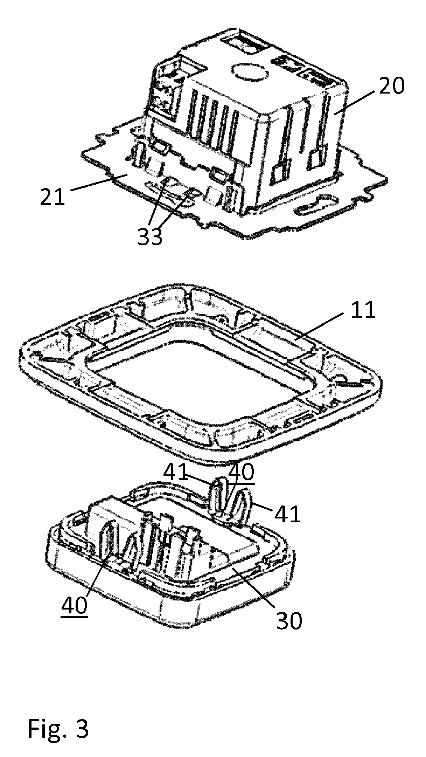

Die **Figur** 3 zeigt beispielhaft ein erfindungsgemäßes elektrisches/elektronisches Installationsgerät vor dem Zusammenbau, dass aus einem in einer Installationsdose unterzubringenden Funktionseinsatz 20 mit daran angeordnetem Tragring 21 und einem, unter Zwischenschaltung eines Abdeckrahmens 11, auf der Wand anzuordnenden Funktions- oder Bedienteil 30. Am Funktions- oder Bedienteil 30 ist gegenüberliegend jeweils eine aus einem bandförmigen metallischen Material einstückig gebildete Federanordnung 40 angebracht. Jede Federanordnung 40 wirkt mit entsprechend ausgeführten Haltebereichen des an der Installationsdose festgelegten Tragringes 21 zusammen.

Erfindungsgemäß weisen die beiden, am Funktions- oder Bedienteil 30 befestigten Federanordnungen 40 jeweils zwei Federteile 41 auf. Die über einen Steg miteinander verbundenen jeweils zwei Federteile 41 werden bei der Montage des Funktions- oder Bedienteiles 30 am Tragring 21 durch im Tragring 21 vorgesehene Öffnungen 33 geführt. Der zur Befestigung an der Bedien- oder Funktionseinheit vorgesehene Steg der Federanordnung 40 wird, beispielsweise an der im eingebauten Zustand zur Wand weisenden Seite des Bedien- oder Funktionsteiles, ganz oder teilweise eingespritzt.

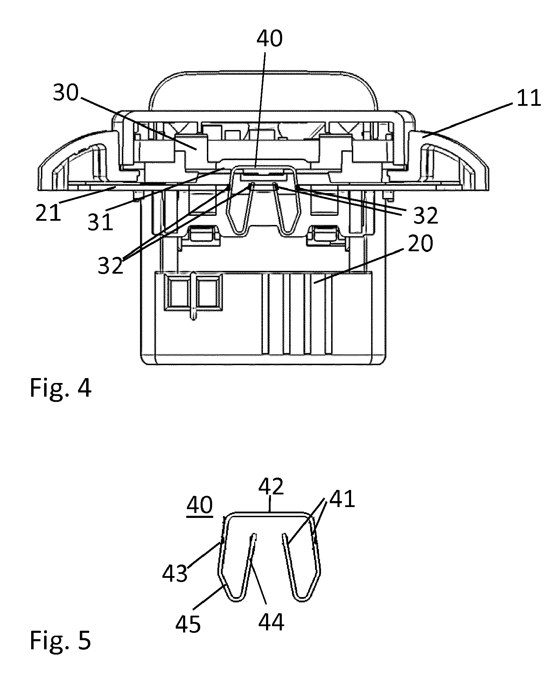

Eine detaillierte Ansicht der Federanordnung 40 veranschaulicht insbesondere die **Figur** 5.

**Figur** 4 zeigt eine Schnittdarstellung des erfindungsgemäßen Installationsgerätes aus der Figur 3 im Zusammenbau, mit dem in der Installationsdose untergebrachten als Unterputzeinsatz ausgeführten Funktionseinsatz 20. Auf dessen Tragrahmen bzw. Tragring 21 ist unter Zwischenschaltung des Abdeckrahmens 11 das Bedienteil oder Funktionsteil 30 mittels jeweils zwei hintereinander am Bedien- oder Funktionsteil 30 angebrachten Federanordnungen 40 aufgesteckt. Jede der beiden Federanordnungen 40 wirkt mit den entsprechend ausgeführten Haltebereichen 32 des Tragrahmens bzw. Tragringes 21 zusammen.

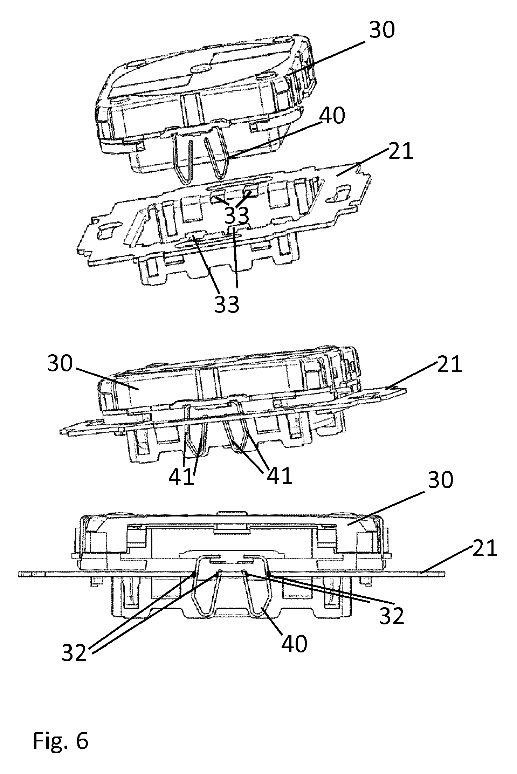

In der **Figur** 5 ist eine schematische vergrößerte Schnittdarstellung einer beispielhaften Federanordnung 40 dargestellt. Die an den Enden des Steges 42 der Federanordnung 40 angeordneten Federteile 41 sind als zwei sich gegenüberliegende symmetrisch zueinander aufgebaute Teile ausgeführt. Jedes Federteil 41 ist aus jeweils einem äußeren Federschenkel 43 und einem innenliegenden ein freies Ende aufweisenden Federschenkel 44 gebildet. Die Federschenkel 43, 44 liegen jeweils an den Haltebereichen 32 des an der Installationsdose festgelegten Tragringes 21 so an, dass die Federteile 41 in ihrer Endposition jeweils zweiseitig an der Innenseite der Haltebereiche 32 festgeklemmt sind. Dies zeigen die **Figuren** 4 und 6.

An den direkt am Steg 42 angeordneten äußeren Federschenkeln 43 an deren mit dem innenliegendem Federschenkel 44 verbundenen Ende ist ein Teilbereich 45 abgewinkelt und bildet jeweils eine Einführschräge, welche das Aufstecken des Bedien- oder Funktionsteils 30 auf den Funktionseinsatz 20 bei der Montage des Installationsgerätes an der Wand erleichtert.

**Figur** 6 zeigt eine beispielhafte Explosionsansicht als Schnittdarstellung durch das erfindungsgemäße Installationsgerät mit den im Tragring 21 vorgesehene Öffnungen 33, durch welche die Federteile 41 der an der Unterseite des Bedien- oder Funktionsteils 30 angebrachten Federanordnungen 40 beim Zusammenbau des Installationsgerätes geführt werden, so dass die Federteile 41 in ihrer Endposition jeweils zweiseitig an der Innenseite der Haltebereiche 32 festgeklemmt sind.

Der innenliegende das freie Ende aufweisende Federschenkel 44 und der am Haltebereich 32 des Tragringes 21 anliegende Bereich des äußeren Federschenkels 43 sind gradlinig ausgeführt.

Durch das Zusammenwirken der Federschenkel 43, 44 mit den zugehörigen Haltebereichen 32 am Tragring 21 wirken an den Haltebereichen 32 des Tragringes 21 wesentlich höhere Haltekräfte für das Bedien- und Funktionsteil 30 als die bekannten Haltefedern, mit denen ein Bedienteil 30 am Tragring 21 befestigt ist, aufbringen.

### Bezugszeichenliste

- 11: Abdeckrahmen
- 20: Unterputzeinsatz, Funktionseinsatz
- 21: Tragrahmen, Tragring
- 30: Funktionsteil, Bedienteil
- 31: Sockel des Bedien- oder Funktionsteiles
- 32: Haltebereich am Tragrahmen
- 33: Öffnungen im Tragrahmen zur Aufnahme der Federschenkel
- 40: Federanordnung
- 41: aus jeweils einem äußeren und einem innenliegenden Federschenkel gebildetes einstückiges Federteil
- 42: Steg, Federsteg
- 43: äußerer Federschenkel
- 44: einen freien Endbereich aufweisender innenliegender Federschenkel
- 45: Teilbereich, Einführschräge

## Patentansprüche

1. Elektronisches Installationsgerät für die Gebäudeinstallationstechnik oder Hauskommunikationstechnik mit einem in einer Installationsdose unterzubringenden Funktionseinsatz (20), welcher mit einem Tragrahmen (21) ausgestattet ist, und mit einem auf dem Tragrahmen (21) anzuordnenden aufsteckbarem Bedien- oder Funktionsteil (30), welches mittels zumindest einer am Bedien- oder Funktionsteil (30) angebrachten Federanordnung (40) lösbar am Tragrahmen (21) des Funktionseinsatzes (20) befestigbar ist, wobei die zumindest eine Federanordnung (40) einen Steg (42) aufweist, an dessen Enden jeweils ein Federteil (41) angeordnet ist, wobei die Federteile (41) symmetrisch zueinander ausgeführt sind und jedes Federteil (41) der zumindest einen Federanordnung (40) mit einem entsprechend ausgeführtem Haltebereich (32) des Tragrahmens (21) zusammenwirkt, **dadurch gekennzeichnet, dass** das das jeweilige Federteil (41) aus zwei einstückig miteinander verbundenen Federschenkeln (43, 44) gebildet ist, wobei beide Federschenkel des jeweiligen Federteiles an je einem Haltebereich (32) des an der Installationsdose festgelegten Tragrahmens (21) so zur Anlage kommen, dass die Federteile (41) in ihrer Endposition jeweils zweiseitig an der Innenseite der Haltebereiche (32) festgeklemmt sind.

2. Elektronisches Installationsgerät nach Anspruch 1, **dadurch gekennzeichnet, dass** der Funktionseinsatz (20) als Unterputzeinsatz mit darauf befindlichem Tragring (21) ausgeführt ist.

3. Elektronisches Installationsgerät nach Anspruch 1 oder 2, **dadurch gekennzeichnet, dass** am Funktions- oder Bedienteil (30) jeweils zwei hintereinander angeordnete Federanordnungen (40) vorgesehen sind.

4. Elektronisches Installationsgerät nach einem der vorstehenden Ansprüche, **dadurch gekennzeichnet, dass** jedes Federteil (41) jeweils aus einem äußeren Federschenkel (43) und einem innenliegenden ein freies Ende aufweisenden Federschenkel (44) gebildet ist, wobei der innenliegende Federschenkel (44) und der am Haltebereich (32) des Tragringes (21) anliegende Bereich des äußeren Federschenkels (43) gradlinig ausgeführt sind.

5. Elektronisches Installationsgerät nach Anspruch 4, **dadurch gekennzeichnet, dass** am direkt am Steg (42) angeordneten äußeren Federschenkel (43) an seinem mit dem innenliegenden Federschenkel (44) verbundenen Ende ein Teilbereich abgewinkelt ist und eine Einführschräge (45) bildet.

6. Elektronisches Installationsgerät nach einem der vorstehenden Ansprüche, **dadurch gekennzeichnet, dass** wenigstens ein Bereich des zwischen den beiden Federteilen (41) angeordneten Steges (42) eine nicht lösbare Verbindung mit seiner auf dem Bedien- oder Funktionsteil (30) aufliegenden Fläche bildet.

7. Elektronisches Installationsgerät nach einem der vorstehenden Ansprüche, **dadurch gekennzeichnet, dass** das Funktions- oder Bedienteil (30) als Schaltgerät, Anzeigegerät, Sensorfunktions- oder Sensorbedienteil oder Abdeckplatte ausgeführt ist.

8. Elektronisches Installationsgerät für die Gebäudeinstallationstechnik oder Hauskommunikationstechnik mit einem in einer Installationsdose unterzubringenden Tragrahmen (21) und mit einem auf dem Tragrahmen (21) anzuordnenden aufsteckbarem Bedien- oder Funktionsteil (30), welches mittels zumindest einer am Bedienteil oder Funktionsteil (30) angebrachten Federanordnung (40) lösbar am Tragrahmen (21) befestigbar ist, wobei die zumindest eine Federanordnung (40) einen Steg (42) aufweist, an dessen Enden jeweils ein Federteil (41) angeordnet ist, wobei die Federteile (41) symmetrisch zueinander ausgeführt sind und jedes Federteil (41) der zumindest einen Federanordnung (40) mit einem entsprechend ausgeführtem Haltebereich (32) des Tragrahmens (21) zusammenwirkt, **dadurch gekennzeichnet, dass** das jeweilige Federteil (41) aus zwei einstückig miteinander verbundenen Federschenkeln (43, 44) gebildet ist, wobei beide Federschenkel des jeweiligen Federteiles an je einem Haltebereich (32) des an der Installationsdose festgelegten Tragrahmens (21) so zur Anlage kommen, dass die Federteile (41) in ihrer Endposition jeweils zweiseitig an der Innenseite der Haltebereiche (32) festgeklemmt sind.

9. Elektronisches Installationsgerät nach Anspruch 8, **dadurch gekennzeichnet, dass** das Funktions- oder Bedienteil (30) als Sensorfunktions- oder Sensorbedienteil ausgeführt ist.
